# EUROPEAN PATENT SPECIFICATION

(11) **EP 1 012 203 B1**
(45) Date of publication and mention of the grant of the patent: **21.07.2004**
(21) Application number: 98946420.1
(22) Date of filing: 24.08.1998
(51) Int. Cl.: C08G 65/10, C08G 65/26, C08F 290/06, C04B 24/26, C04B 24/32

(54) **PREPARATION OF FUNCTIONALISED POLYETHERS**
HERSTELLUNG VON FUNKTIONALISIERTEN POLYETHERN
PREPARATION DE POLYETHERS FONCTIONNALISES

(30) Priority: 25.08.1997 US 918081; 08.05.1998 US 74673
(43) Date of publication of application: 28.06.2000
(73) Proprietor: ARCO Chemical Technology, L.P., Greenville, Delaware 19807 (US)
(72) Inventor: SHEN, Jianzhong, West Chester, PA 19382 (US); McDANIEL, Kenneth, G., West Chester, PA 19382 (US); HAYES, John, E., F-60270 Gouvieux (FR); HOLESCHOVSKY, Ulrich, Radnor, PA 19087-4507 (US); HINNEY, Harry, R., Cross Lanes, WV 25313 (US); SHAWL, Edward, T., Wallingford, PA 19086 (US); ZHOU, Xinhau, West Chester, PA 19380 (US)
(74) Representative: Colmer, Stephen Gary
(86) International application number: PCT/EP1998/005363
(87) International publication number: WO 1999/010407

(56) References cited:
- EP-A- 0 291 073
- EP-A- 0 850 894
- WO-A-95/16643
- WO-A-97/39037
- WO-A-97/48656
- FR-A- 2 668 773
- US-A- 5 773 525

## Description

### Technological Field

The present invention relates to the field of functionalised polyethers. More particularly, the subject invention pertains to polyoxyalkylene polyethers and to processes for their preparation. The present invention also relates in particular, to copolymers of such polyethers; to processes for their preparation; and to their use in the field of cement additives. In particular, the copolymers are useful as water reducers and superplasticizers in cement and concrete compositions. The invention further relates to polymer polyol stabilizers, and to polymer polyols prepared therefrom. Polymer polyols prepared by in situ polymerization of vinyl monomers in a polyether polyol, polyester polyol, or polyetherester polyol in the presence of suitable stabilizers are useful in producing a variety of polyurethane products.

### Description Of The Related Art

Polyurethane products are generally prepared by the reaction of a di- or polyisocyanate with a hydroxyl-functional polyoxyalkylene polyether polyol. To provide higher strength and load bearing properties, polyether polyols containing vinyl polymer dispersions were developed. Such "polymer polyols" were initially produced *in situ* in polyether "base" or "carrier" polyols, generally employing acrylonitrile and/or styrene as polymerizable vinyl monomers with an active, free radical polymerization initiator to promote vinyl polymerization. These early polymer polyols were generally of high viscosity and low solids content. Attempts to increase solids content led to yet higher viscosity and "seedy" polyols with numerous large polymer particles.

It was found that higher solids polymer polyols of lower viscosity could be produced by adding polyols modified to contain reactive unsaturation.

Further improvements in the manufacture of polymer polyols utilised preformed stabilizers, and the use of such reactive species has enabled the polymer polyol solids content to be increased to about 50 weight percent with reasonable viscosity.

Additives for cement to increase the fluidity of cement paste, mortars and concretes have been known and in use for many years. These additives are also known as water reducers because they allow less water to be used in a mortar of concrete without loss of slump (a measure of consistency of workability). This class of cement additives permits the use of less water to obtain the same slump, or the attainment of a higher slump at a given water content, or the use of less portland cement to realise the same compressive strength. The performance requirements for water reducing admixtures are specified in ASTM Method C494-92. "Standard Specifications for Chemical Admixtures for Concrete" where a water reducing mixture is defined as an admixture that reduces the quantity of mixing water required to produce concrete of a given consistency by at least 5%. A high range water reducing admixture, also known as a superplasticizer, reduces the quantity of mixing water required to produce concrete of a given consistency by 12% of greater.

Commericial water reducing admixtures include lignin sulfonates and naphthalene sulfonate-formaldehyde condensates.

It would be desirable to prepare better defined reactive unsaturation-containing polyethers which can, inter alia, be used to prepare a wide variety of polymer polyols. It would be further desirable to be able to prepare polymer polyol stabilizers in shorter time and at less cost. It would be yet further desirable to prepare polymer polyol stabilizers which themselves have low viscosity. The polyethers thus prepared may be used to manufacture polymer polyols, or in other applications where polyethers having both hydroxyl functionality and reactive unsaturation are necessary.

It would also be desirable to prepare defined reactive unsaturation-containing species which can be used to prepare a wide variety of copolymers useful as superplasticizers and water reducers in cementitious compositions.

### Summary Of The Invention

It has now been surprisingly discovered that well defined reactive unsaturation-containing species may be prepared by oxyalkylating an oxyalkylatable molecule containing reactive unsaturation in the presence of a double metal cyanide complex catalyst and, optionally, a vinyl polymerization inhibitor. A broad range of active-hydrogen functionalities have been found to be useful in the subject process. The reactive unsaturation-containing polyol derivatives are useful in all types of polyether polymer production, including both macromer-based and preformed stabilizer-based polymer polyol production processes. The products are also useful in other applications such as starters for the preparation of impact-modified polymers such as styrene and ABS, or in the preparation of tougheners which may be blended with such thermoplastics. These reactive unsaturation-containing species may be utilized as macromonomers and copolymerized with one or more other monomers to form copolymers useful for controlling the fluidity of freshly mixed concrete.

### Description Of The Preferred Embodiment

The subject invention process involves the oxyalkylation of a reactive-unsaturation-containing, active hydrogen initiator molecule with one or more alkylene oxides in the presence of a double metal cyanide complex catalyst under conditions where no substantial addition polymerization involving the sites of unsaturation occurs. Thus, the "initiator" or "starter" molecules must have at least one site of ethylenic or acetylenic unsaturation, and at least one functionality capable of being oxyalkylated, the oxyalkylatable functionalities comprising not more than one carboxylic acid group per molecule. Suitable non-carboxylic acid functionalities are hydroxyl, amine, sulfhydryl, alkanolamine, and the like. Essentially all oxyalkylatable functionalities may be used. Preferred, however, are initiator molecules having hydroxyl functionalities. Non-limiting examples of such starter molecules, for example, are hydroxyalkylacrylates and methacrylates such as hydroxyethylacrylate, preferably 2-hydroxyethylacrylate, hydroxypropylacrylate, preferably 2-hydroxypropylacrylate, hydroxybutylacrylate, hydroxyethylmethacrylate and hydroxypropylmethacrylate; unsaturated monocarboxylic acids, particularly monounsaturated monocarboxylic acids and α-unsaturated acids such as acrylic acid and methacrylic acid; half esters of unsaturated carboxylic acids such as maleic acid methyl half ester, maleic acid ethyl half ester, and fumaric acid methyl half ester; oligomeric reaction products of unsaturated dicarboxylic acids or acid anhydrides with diols or polyoxyalkylene oligomer glycols such as bis(2-hydroxyethyl)maleate and bis(2-hydroxyethyl)fumarate; unsaturated aromatic compounds such as 4-vinylphenol. This list is illustrative only, and not limiting. The initiator molecule must have reactive unsaturation as well as at least one oxyalkylatable functionality, and not more than one free (non-derivatized) carboxylic acid group per molecule. The initiator molecules may have more than one site of reactive unsaturated functionality as well, e.g. glyceryl-diacrylate, and divinylphenol. The molecular weight of the initiator molecule should be below 500 Da, and more particularly below 300 Da. When the starter is polymeric (oligomeric), the molecular weight is a number average molecular weight, as are other molecular weights expressed herein unless indicated otherwise.

By the term "reactive unsaturated functionality" is meant ethylenic or ethylynic (acetylenic) unsaturation capable of undergoing free radical induced addition polymerization in the presence of unsaturated monomers. While reactive unsaturation displaying greater reactivity than the allyl group is desirable for the preparation of polymer polyol stabilizers, allylic unsaturation and other unsaturation of similar or lower reactivity may be useful when the novel products of the subject invention are contemplated for other uses, i.e. as impact modifiers, grafted dispersing aids, and the like. Generally, however, the reactive unsaturation is a more active unsaturation such as maleate, and particularly fumarate, acrylic, propenyl, isopropenyl, alkenyl generally, or the like. Ethylynic unsaturation such as that provided by 1,4-butynediol is also useful, as are cyclohexeneols, cyclohexenediols, cyclopentenols, and the like.

Preferably, the polyether or macromonomers obtained by acyalkylation of the initiator molecule corresponds to mixtures containing one or more of the two formulae:
R [(̵ R²-0)̵ₙH]ₒ or R (̵ X -{- (R²-0 )ₙ-H}ₘ )ₒ where o is an integer from 1 to about 8, preferably 1 to about 4, and in particular 1 or 2; n is an integer whose average value is such that the product n x o is from about 3, such as 10 to about 500, more preferably 15 to about 400, and in particular about 20 to about 250 for example about 5 to about 100; R² is alkylene or substituted alkylene, i.e. C₂₋₃₀ alkylene optionally substituted by groups such as halo, i.e. fluoro, chloro, or bromo; alkoxy, i.e. methoxy, nitro; cyano, hydroxyalkyl, and the like; X is a linking group selected from O, S, N, 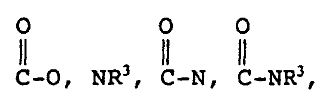 and the like wherein the number of initially free 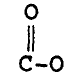 linking groups per molecule preferably does not exceed 1; and m is 1 for singly oxyalkylatable linking group precursors and 2 for doubly oxyalkylatable linking group precursors; wherein R³ is C₁₋₈ lower alkyl, optionally substituted by the same substituents as optional for R; and wherein R is a C₂₋₃₀ hydrocarbon containing at least one site of ethylenic or ethylynic (acetylenic) unsaturation, optionally substituted by non-reactive groups such as halo, alkoxy, cyano, and the like, and optionally containing interspersed heteroatoms, particularly O, S and/or N. R may be aliphatic, cycloaliphatic, aromatic, arylaliphatic, heteroaromatic, and the like, provided that when R is aromatic or heteroaromatic, the aromatic ring structure is substituted by at least one ethylenic or ethylynic radical-containing group. R² is most preferably ethylene (C₂H₄), propylene (C₃H₆), butylene (C₄H₉), or some combination thereof.

The alkylene oxide employed in oxyalkylating the "starter" or "initiator" may be any alkylene oxide polymerizable with double metal cyanide catalysts. Examples include ethylene oxide, propylene oxide, 1,2- and 2,3-butylene oxide, C₆₋₃₀ α-olefin oxides, oxetane, glycidol, and halogenated alkylene oxides. Preferred are propylene oxide and ethylene oxide. Mixtures of more than one alkylene oxide may be used, for example, mixtures of propylene oxide and ethylene oxide. Alkylene oxides and their mixtures may be polymerized onto the initiator molecule in one or more stages, to produce homopolymers, block copolymers, random copolymers, block random copolymers, and the like. "Copolymer" in the present application includes "terpolymer" and mixtures of more than three alkylene oxides as well. Other comonomers may be polymerized along with the alkylene oxide. Examples of copolymerizable monomers include those disclosed in U.S. Patents 3,278,457; 3,278,458; 3,404,109; 3,538,043; 3,900,518; 3,941,849; 4,472,560; 5,145,833; 5,145,883; and 5,223,583 which are herein incorporated by reference. Glycidol is a particularly preferred copolymerizable monomer, which may be used to introduce additional hydroxyl functionality.

Suitable double metal cyanide catalysts are by now well known to those skilled in the art. Double metal cyanide complex catalysts are non-stoichiometric complexes of a low molecular weight organic complexing agent and optionally other complexing agents with a double metal cyanide salt, e.g. zinc hexacyanocobaltate. Exemplary double metal cyanide complex catalysts ("DMC catalysts") include those suitable for preparation of low unsaturation polyoxyalkylene polyether polyols as disclosed in U.S. Patents 3,427,256; 3,427,334; 3,427,335; 3,829,505; 4,472,560; 4,477,589; and 5,158,922. Preferably however, the DMC catalysts used are those capable of preparing "ultra-low" unsaturation polyether polyols, particularly homopolyoxypropylene polyether polymers and polyoxypropylene/polyoxyethylene random polyether copolymer polyols. The polyoxyalkylene polymers produced by the catalysts typically have levels of unsaturation (other than the purposefully introduced unsaturation of the subject invention starter molecules) less than about 0.010 meq/g as measured by ASTM D-2849-69, "TESTING OF URETHANE FOAM POLYOL RAW MATERIALS" . Such catalysts are disclosed in U.S. Patents 5,470,813 and 5,482,908, and 5,545,601, which are herein incorporated by reference. Preparation of the unsaturation-containing polyethers or macromonomers of the present invention is facilitated by such highly active catalysts under conditions where DMC catalysts of lesser activity are often inoperative or lead to addition polymerization of the unsaturated sites unless low oxyalkylation temperatures are used, often leading to gelling of the reactor.

Oxyalkylation conditions may be varied to suit the particular reactive unsaturation-containing initiator, alkylene oxide, and the like. For example, with liquid or low melting initiators, oxyalkylation may be effected by oxyalkylating neat, while with these same initiators or with solid initiators of higher melting point, oxyalkylation in solution or suspension in inert organic solvent may be desired. Suitable solvents include aprotic polar solvents such as dimethylsulfoxide, dimethylacetamide, N-methylpyrollidone, dimethylformamide, acetonitrile, methylene chloride, and especially the more volatile hydrocarbon solvents such as benzene, toluene, ethylbenzene, cyclohexane, petroleum ether, methylethylketone, cyclohexanone, diethylether, tetrahydrofuran, and the like. It has been found that certain difficulty soluble initiators may be initially oxyalkylated in suspension in organic liquid such as toluene, and following oxyalkylation with from 1 to 4 mols of alkylene oxide, will form soluble reaction products which can be further oxyalkylated in solution.

Oxyalkylation temperatures and pressures when employing vinyl polymerization inhibitors are conventional. Temperatures may range from room temperature or below to ca. 150°C or higher. Preferably, temperatures in the range of 70°C to 140°C are used, more preferably about 90°C to about 135°C. When highly active DMC catalysts capable of producing ultra-low unsaturation (≤ 0.010 meq/g) are used in the present process, it has been rather unexpectedly found that when the reaction is conducted at low temperatures, i.e. below 90°C, and most preferably in the range of 60-80°C, that polyoxyalkylation can occur at reasonable rates without addition polymerization of the unsaturated moieties present, even in the absence of a vinyl polymerization inhibitor. Alkylene oxide pressure is adjusted to maintain a suitable reaction rate, consistent with the ability of the process system to remove heat from the reactor. Pressures from 34·5kPa (5-psig) or lower to about 620·5kPa (90 psig) are useful. A pressure of 55·1-103·4kPa (8-15 psig), preferably 68·9-82·7 kPa (10-12 psig) when employing propylene oxide, ethylene oxide, or mixtures of these alkylene oxides may be advantageous.

Catalyst concentration is generally expressed as ppm based on the weight of the product. The amount of catalyst will depend upon the activity of the particular DMC catalyst. For catalysts of lower activity, such as those useful in preparing low unsaturation polyols, relatively large amounts of catalyst such as 250 ppm to 1000 ppm may be necessary to achieve a substantial reaction rate under the process conditions chosen. With very active catalysts such as those disclosed in U.S. Patents 5,470,813, 5,482,908, and 5,545,601, amounts from less than 5 ppm to 250 ppm or higher are useful, more preferably from about 15 ppm to about 150 ppm.

In a typical synthetic procedure, the reaction is begun by introducing the reactive unsaturation-containing, oxyalkylatable initiator into a reaction vessel suitable for polyoxyalkylation, with or without a solvent or organic suspending agent. The catalyst is then introduced, either alone or in admixture with further solvent, suspending agent, or other diluent. The reactor is sealed, flushed with nitrogen, heated to the desired temperature, and alkylene oxide added until a pressure of c.a. 68·9kPa (10 psig) is reached. The reactor pressure is monitored until an initial pressure drop signifies that the "induction period" characteristic of DMC catalysts is over, and the catalyst has been activated. The induction period may be lessened by use of DMC catalysts suitable for preparing ultra-low unsaturation polyoxyalkylene polyols, and by the use of preactivated catalyst. Once the catalyst has been activated, alkylene oxide or oxides (oxide(s)) are added in admixture and/or in sequence to prepare a product of desired structure and molecular weight. Further details of the oxyalkylation, purification, etc., may be had with reference to the aforementioned U.S. patents, which are incorporated, for this and other purposes, by reference.

The oxyalkylation of the initiator may also take place with continuous addition of the initiator during the course of the reaction as disclosed in published PCT application WO97/00436, hereby incorporated by reference. For example, the initiator or initiators may be fed to the reactor continuously, either dissolved in alkylene oxide, dissolved in inert diluent, or, with liquid initiators, neat. The continuous addition of the initiator(s) may also be accompanied by continuous removal of product, resulting in a continuous stabilizer synthesis process, as disclosed in U.S. Patent 5689012, also incorporated herein by reference.

When prepared at a temperature of about 90°C or higher, the oxyalkylation of the reactive-unsaturation-containing molecule should desirably be conducted in the presence of a vinyl polymerization inhibitor, preferably of the type which function without the presence of oxygen, since oxyalkylations are generally conducted "in vacuo", meaning in this case that virtually the entire reactor pressure is due to alkylene oxide; or in the presence of a gas inert to the process, e.g. argon, nitrogen, etc. In other words, the partial pressure of oxygen generally is substantially zero. It is common to flush oxyalkylation reactors with nitrogen one or more times prior to final evacuation and introduction of alkylene oxide. Suitable inhibitors are well known to those skilled in the art of vinyl polymerization. Suitable inhibitors are, for example, 1,4-benzoquinone, 1,4-naphthoquinone, diphenylphenylhydrazine, FeCl₃, CuCl₂, sulfur, aniline, t-butylcatechol, trinitrobenzene, nitrobenzene, chloranil, and the like. Benzoquinone is preferred.

The inhibitor should be used in an amount effective to inhibit polymerization of the reactive unsaturation-containing initiator. Thus, the amount will vary with the reactivity of the particular type of unsaturation. Acrylates and methacrylates, for example, may require higher levels of inhibitor than less reactive unsaturation-containing initiators. The amount of inhibitor will also vary with oxyalkylation temperature, with higher temperatures requiring higher amounts of inhibitor. Amounts of inhibitor, in weight percent relative to the weight of the reactive-unsaturation-containing initiator, may vary from about 0.01 weight percent to about 5 weight percent, preferably from about 0.05 weight percent to about 1 weight percent, and more preferably from about 0.1 weight percent to about 0.5 weight percent. The latter range is particularly useful with 1,4-benzoquinone. If the vinyl polymerization inhibitor is not used, particularly with less active DMC catalysts, the product may be highly colored, or gelling of the product may occur.

Following oxyalkylation, the product may be vacuum stripped, for example using a stream of nitrogen, to remove unreacted monomers and other volatile components. The product may also be filtered to remove traces of DMC catalysts or their residues or may be subjected to other methods of catalyst removal. When DMC catalysts of the ultra-low unsaturation-producing type are employed, the small amounts of catalysts may be left in the product, or the product may be subjected to simple filtration.

The polyethers thusly produced may be used to prepare polymer polyols by adding from less than about 0.001 mol to 0.3 mol, preferably 0.01 mol to about 0.1 mol of stabilizer per mol of "base" or "carrier" polyol. One or more vinyl monomers, e.g. acrylonitrile, styrene, acrylic acid, methylmethacrylate, methylacrylate, p-methylstyrene, α-methylstyrene, vinylchloride, vinylidene chloride, bromostyrene, and the like are added singly or in admixture, preferably dissolved in additional carrier polyol.

A vinyl polymerization initiator, e.g. an organic peroxide, hydroperoxide, hydrogen peroxide, persulfate, peroxyester, azo compound, or the like is added, and polymerization commenced. Examples of suitable free radical polymerization initiators include acyl peroxides such as didecanoyl peroxide and dilauroyl peroxide, alkyl peroxides such as t-butyl peroxy-2-ethylhexanoate, t-butylperpivalate, t-amyl peroctoate, 2,5-dimethyl-hexane-2,5-di-per-2-ethylhexoate,t-butylperneo-decanoate,t-butylperbenzoate and 1,1-dimethyl-3-hydroxybutylperoxy-2-ethylhexanoate, and azo catalysts such as azobis(isobutyronitrile), 2,2'-azo-bis-(2-methylbutyronitrile), and mixtures thereof. Most preferred are the acyl peroxides of the above formula, and the azo catalysts.

The polymerization initiator concentration employed is not critical and can be varied considerably. As a representative range, the concentration can vary from about 0.1 to about 5.0 weight percent or even more, based upon the total feed to the reactor. Up to a certain point, increases in the catalyst concentration result in increased monomer conversion; but further increases do not substantially increase conversion. The particular catalyst concentration selected will usually be an optimum value considering all factors, including costs. It has been determined that low concentrations can be used in conjunction with high potency performed stabilizers while still achieving stable polymer/polyols.

The polymer polyol preparation may be conducted in batch, semi-batch, and continuous processes. Following vinyl polymerization, any unreacted monomers are generally stripped from the product. The monomer-free product may be used as is, or may be filtered to remove any large particles which may have been created. Further reference to polymer polyol preparation may be made to U.S. Patents 5,196,476; 4,148,840; 4,454,255; and 5,494,957, which are herein incorporated by reference.

In addition to use as stabilizers in polyether polymer polyol production, the reactive unsaturation-containing stabilizers of the subject invention may also be used for other products, for example, but not by limitation, to form impact modifiers, either ex situ or in situ. For example, preformed vinyl polymer impact modifiers may be prepared by reacting the reactive unsaturation-containing stabilizer with one or more polymerizable vinyl monomers such as those discussed previously, as well as multiply unsaturated monomers such as butadiene and the like. The polymerization may be affected neat, in solution in suitable solvent, or in ordinary or reverse emulsion in an aqueous system. The *ex situ* impact modifiers may be separated and blended into a polymer, e.g. polystyrene, polymethyl-methacrylate, polyesters, polyamides, and the like which are desired to be impact-toughened. Alternatively, the polymerization to form the polymer to be toughened may take place in the presence of the reactive unsaturation-containing initiator, to prepare an in situ toughened product. Impact toughened polystyrene, polyacrylonitrile, SAN, ABS, PVC, and the like may be toughened in this manner. An unexpected benefit of the subject process is that the reactive-unsaturation-containing polyethers of the subject invention are of low color, permitting their use with transparent and white thermoplastics without inducing undesired coloration.

By the term "well defined " as used herein is meant a composition of relatively predictable composition at the molecular level in view of the initiator used. For example, polyoxypropylation of a reactive-unsaturation-containing molecule with a single oxyalkylatable hydrogen should produce a polyoxypropylene polyether having a hydroxyl group at one terminus and the reactive unsaturation-containing initiator at the opposite terminus. Relatively few or no other types of molecules are expected. The variation in oxypropylation, e.g. the polydispersity, should increase somewhat with increasing molecular weight, but should be relatively low, in the range of 1.0 to 3.0, more preferably in the range of 1.0 to about 2.5, and most preferably in the range of 1.0 to 1.5.

In the case of reactive unsaturation-containing molecules with two non-adjacent oxyalkylatable hydrogen atoms, e.g. 1,4-butenediol, "well-defined" means that in the majority of molecules, the reactive unsaturation should be substantially centered within the polyether backbone, with the extended polyether chains exhibiting expected statistical variation in length. The product should contain less than 10 mol percent and preferably substantially no molecules containing two or more reactive unsaturation sites, unless a starter containing multiple sites is used. In other words, a bis-oxyalkylatable starter should result in a substantially bis-oxyalkylated product without extensive transesterification, Michael-addition reactions, other addition reactions across the site of unsaturation, etc.

Well defined products have hydroxyl functionalities close to that predicted based on the functionality of the initiator. Singly oxyalkylatable initiators, for example, will result in polyethers or macromonomers having very close to one hydroxyl group per molecule as actually measured, while a bis-oxyalkylatable initiator will result in a product bearing close to two hydroxyl groups per molecule. Specifically, for example, a polyether or macromonomer prepared by a process not in accord with the subject invention, for example by esterifying a mono- or bis-hydroxyl-reactive unsaturated moiety with either a conventional polyether polyol or with a DMC-catalyzed low unsaturation polyol, will not produce a well-defined product as that term is used herein. In a like vein, by the term "statistically similar" is meant, with respect to polyoxyalkylene polyether chains formed during preparation of the polyether or macromonomer, that the majority of such chains will be of similar length, with variations in length substantially that expected when preparing strictly hydroxyl functional polyoxyalkylene polyols employing DMC catalysts from similarly functional but saturated starter molecules.

Conventional oxyalkylation with alkylene oxides in the presence of basic catalysts cannot be used to prepare the unique reactive unsaturation-containing polyether or macromonomer of the subject invention. The base-catalyzed oxyalkylation will introduce a considerable quantity of allyl group-containing oligomers of broad molecular weight range which (where the polyether is intended as a stabiliser) will dilute the stabilizing ability thereof. Moreover, the various reactants, partial reaction products, etc., will also interact in the presence of the strong base, to produce a variety of transesterifications and side reactions which would lead to a variety of ill-defined chemical linkages.

The unsaturated polyethers or macromonomers of the subject invention are quantitatively different from those prepared by reaction of a hydroxyl-reactive, reactive unsaturation-containing monomer with a preformed polyether polyol. In particular, with monofunctional reactive unsaturation-containing initiators such as hydroxyethylmethacrylate, oxypropylation will yield a polyether which contains methacrylate functionality at one end of the molecule, and secondary hydroxyl at the other end. By contrast, reaction of methacrylic acid or isocyanatoethyl-methacrylate with a polyoxypropylene monol, e.g. polyoxypropylated n-butanol, will result in a methacrylate functional polyether with no hydroxyl functionality. Reaction of isocyanatoethyl-methacrylate or methacrylic acid with a polyoxypropylene diol will result in a mixture containing both singly methacrylate-functional as well as doubly methacrylate-functional products. The products, again, will not be well defined.
Moreover, such products will have an undesirable tendency to form gels when copolymerized with unsaturated comonomers such as acrylic acid due to the presence of doubly methacrylate-functional products capable of polymerization at each end of the molecule.
WO95/16643 discloses a polyethylene glycol monoester monomer, formed by one of the methods discussed above. In WO95/16643, the monomer is formed by esterification of a polyalkylene glycol with, e.g. acrylic acid. The monomer products of WO95/16643 (which are subsequently copolymerised with an unsaturated monomer to form an admixture for concrete) unlike those of the present invention, do not have the well-defined characteristics of the unsaturated polyethers or macromonomers of the present invention.

The comonomer to be copolymerized with the unsaturated macromonomer is ethylenically unsaturated and contains at least one carboxylic acid-based group, which may be present in the form of a free carboxlic acid, a salt of a carboxylic acid, a hydroxyalkyl ester of a carboxylic acid, or an anhydride (preferably a cyclic anhydride). Mixtures of such comonomers may be utilized if so desired. Preferably, the structure of the comonomer corresponds to the formula 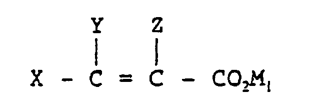 wherein X and Y are independently selected from hydrogen, a moiety represented by the formula (CH₂)ₘ CO₂,M², where m is an integer of 0 to 2, methyl, or X together with -CO₂M² form an anhydride ring, Z is selected from hydrogen or methyl and M¹ and M² are independently selected from hydrogen, alkali metal, alkaline earth metal, ammonium, alkyl ammonium, or hydroxyalkyl. Specific illustrative comonomers suitable for use in the present invention include, but are not limited to, maleic acid, fumaric acid, citraconic acid, maleic anhydride, hydroxyethylacrylate, hydroxypropylacrylate, hydroxyethylmethacrylate, hydroxypropylmethacrylate, citraconic anhydride, acrylic acid, methacrylic acid, and alkali metal, alkaline earth metal, ammonium, and alkyl ammonium salts of the aforementioned acids. Acrylic acid is particularly preferred.

The ratio of the unsaturated macromonomer to the comonomer is not believed to be particularly critical and may be readily varied as desired to optimize or otherwise modify the performance of the copolymer as a water reducer or superplasticizer in cement or concrete. The preferred ratio will depend upon a number of factors, including, for instance, the chemical compositions of the particular unsaturated macromonomer and comonomer(s) selected for use, the degree of oxyalkylation in the macromonomer and so forth. Typically, however, from 2 to 98% by weight of the macromonomer and from 2 to 98% by weight of the comonomer(s) (the total being 100%) may be utilized. Ethylenically unsaturated comonomers which do not contain the aforementioned carboxylic acid-based groups, such as, for example, vinyl aromatics (e.g., styrene), alkyl esters of unsaturated carboxylic acids (e.g., methyl methacrylate), unsaturated sulfonic acids and salts thereof (e.g., vinyl sulfonic acid) may also be incorporated in the copolymer. The overall composition of the copolymer should, however, be selected so as to render the copolymer (either in its acid form or its fully or partially neutralized form) soluble in water.

The number average molecular weight may also be controlled as may be desired to influence the performance of the copolymer as a cement additive. Chain transfer agents of the type conventionally used in free radical polymerization such as dodecylmercaptan or mercaptoacetic acid may be utilized for such purpose. Typically the chain transfer agent will be present at a concentration of from about 0.1 to about 5.0 weight percent based on the total weight of the feed to the reactor. Generally speaking, copolymer number average molecular weights of from about 1000 to 1,000,000 may be employed, with the range of from about 5,000 to 100,000 being especially preferred.

The copolymers are prepared by a process which utilizes as one of the comonomers an unsaturated macromonomer obtained by oxyalkylation of an initiator molecule such as acrylic acid with an epoxide such as oxyalkylation of an initiator molecule such as acrylic acid with an epoxide such as ethylene oxide and/or propylene oxide using a double metal cyanide complex catalyst. The unsaturated macromonomer is characterized by having not more than substantially one initiator molecule of reactive unsaturation-containing species and not more than about 0.020 meq/g unsaturation beyond that of initiator molecule-derived unsaturation. The macromonomers have a greatly reduced tendency to form gels during copolymerization as compared to conventionally prepared analogues, which contain significant levels of polyunsaturated species.

The copolymers of the present invention are prepared by combining the aforedescribed unsaturated-macromonomer (or mixture of macromonomers) and one or more comonomers in a suitable solvent. A solvent is presently utilized if the macromonomer(s) and comonomer(s) are not miscible under the copolymerization conditions. The solvent to be used in the copolymerization may be any substance in which the macromonomer and other monomers are soluble, with the preferred solvents being water, lower aliphatic alcohols such as methanol, ethanol, isopropanol and the like and mixtures thereof. The copolymerization may also advantageously be carried out in the absence of a solvent. For example, acrylic acid is usually miscible with unsaturated macromonomers prepared using ethylene oxide as at least a portion of the alkylene oxide; the copolymerization of those materials thus can often be performed without solvent.

The copolymerization temperature is not believed to be particularly critical, with the optimum temperature varying depending upon the identity and reactivity of the macromonomer and comonomer(s), the polymerization initiator and solvent, the molecular weight desired, and so forth. Typically, however, temperatures in the range of from about 0°C to about 150°C are suitable.

The copolymer preparation may be conduced in batch, semi-batch, and continuous processes. Following copolymerization, any relatively volatile unreacted monomers are generally stripped from the product.

Prior to using the copolymer as a cement additive, the free carboxylic acid groups and anhydride groups in the copolymer derived from the comonomer may be fully or partially converted to the salt form by conventional methods known in the art such as treatment with base (e.g., caustic) or the like (such methods being sometimes referred to as "neutralization" or "saponification").

The cements with which the copolymer additives of the invention may be used are hydraulic cements, meaning cements which, when made into a paste with water, set and harden as a result of chemical reactions between the water and cement. Suitable cements include ordinary, quick-hardening, and moderate-heat portland cements, alumina cement, blast-furnace slag cement, and flash cement. Of these, portland cements of the ordinary and quick-hardening types are particularly desirable.

The quantity of copolymer additive used may vary with factors such as the degree of oxyalkylation of the unsaturated macromonomer, the type(s) of alkylene oxide selected for use, the molecular weight of the copolymer, and the identity and relative proportions of the comonomer and the unsaturated macromonomer. The additive quantity to be used in accordance with the invention is usually in the range of 0.001-10%, preferably 0.01 to 1%, based on the weight of dry cement. The quantity of water to be used for setting the cement is not critical; generally weight ratios of water to cement in the range 0.25:1 to 0.7:1, preferably 0.3:1 to 0.5:1 are satisfactory. Where desired, an aggregate such as pebbles, gravel, sand, pumice, or fired pearlite or mixtures thereof may be employed in conventional amounts.

Advantageously, the copolymer additives of this invention, which function as water reducing agents and/or superplasticizers, are used in combination with other known cement additives.

Among the optionally employable additional additives are: conventional hardening accelerators, e.g., metal chlorides such as calcium chloride and sodium chloride, metal sulfates, such as sodium sulfate, and organic amines such as triethanol-amine; ordinary hardening retarders, e.g. alcohols, sugars, starch and cellulose; reinforcing-steel corrosion inhibitors such as sodium nitrate and calcium nitrite; other water reducing agents such as ligninsulfonic acid salts, as well as salts of oxycarboxylic acid and formalin condensates of naphthalenesulfonic acid; air entrainers; other super plasticizers; shrinkage reducing agents; strength enhancers such as triisopropylamine; antifoaming agents such as tributyl phosphate; fibers such as polypropylene fibers and the like. The quantity of such an optional ingredient or ingredients is usually 0.1-6% by weight of the cement.

The manner of adding the copolymer additive of the invention to the cement may be the same as with ordinary cement admixtures. For example, the copolymer additive can be admixed with a suitable proportion of water and the resulting solution is mixed with cement and aggregate. As an alternative, a suitable amount of the copolymer additive may be added when cement, aggregate and water are mixed. Another method of introducing the additive is to add it to the dry cement prior to or after grinding.

The concrete and the like incorporating the copolymer additive according to the invention may be applied in conventional ways. For example, it may be trowelled, filled in forms, applied by spraying, or injected by means of a caulking gun. Hardening or curing of the concrete and the like may be by any of the air drying, wet air, water and assisted (steam, autoclave, etc.) curing techniques. If desired, two or more such techniques may be combined. The respective curing conditions may be the same as in the past.

Initiators having not more than one carboxylic acid group per molecule are those where the predominant population of molecules contains but one or no carboxylic acid groups. Examples of such initiators are hydroxypropylmethacrylate and methacrylic acid. It would not depart from the spirit of the invention to add minor quantities, i.e. less than 50 mol percent of an unsaturated dicarboxylic acid or related compound such as maleic acid, maleic anhydride, fumaric acid, itaconic acid, 1,4-butynedioic acid, or the like.

The following Examples illustrate the invention:

### Example 1

A one-liter stirred reactor is charged with 105.8 g hydroxypropylmethacrylate, 0.1485 g of a DMC catalyst prepared as disclosed in U.S. Patent 5,545,601, and 0.42 g benzoquinone. The mixture is heated to 100°C with stirring, evacuated, and propylene oxide (29 g) fed to the reactor. The initial pressure of the reactor is 82·7 kPa (12 psig). After 20 minutes, the reactor pressure drops to 6.89 kPa (-1.0 psig) and additional propylene oxide is fed continuously at 6.5 g/min until a total of 645 g has been added. The reactor temperature is maintained at 100°C throughout this process. After propylene oxide addition is complete, the mixture is held at 100°C until a constant pressure is observed. Residual unreacted monomer is then stripped under vacuum at 80°C from the product. The resulting product (725 g) is very slightly yellow with a low viscosity of 0·134 Pa.s (134 cps) (25°C). It has a hydroxyl number of 56.6 mg KOH/g and an unsaturation of 0.0092 meq/g. GPC gives a number average weight of 1037 and a polydispersity (Mw/Mn) of 1.04. NMR shows it contains substantially 15 PO units per methacrylate unit. The proposed structure is consistent with NMR and IR results.

### Comparative Example C1

A procedure similar to that disclosed by Japanese Kokai H5-209052 (1993) is used to prepare a ca. 1000 Da molecular weight product, except that a low molecular weight starter is used instead of a much higher weight polyoxypropylated oligomeric starter. To a one liter stirred reactor is added 70 g hydroxypropylmethacrylate and 0.269 g of a t-butanol complexed double metal cyanide catalyst prepared as disclosed in U.S. Patent 5,470,813. In contradistinction to the subject invention, no vinyl polymerization inhibitor is added. The reaction mixture is vacuum stripped with nitrogen flushing for eight minutes, and the reactor heated to 130°C while stirring. Propylene oxide in the amount of 14 g is fed to the reactor, and the reactor pressure reaches 53·8 kPa (7.8 psig). After 7 minutes, the catalyst is observed to be activated due to an observed pressure drop, and significant exothermic reaction is observed. Propylene oxide is then fed to the reactor at a rate of 3.0 g/min until a total of 430 g is added. The mixture is then held at 130°C until constant pressure is observed. Residual unreacted propylene oxide is stripped under vacuum at 130°C. The product has a viscosity of 2·82 Pa.s (2820 cps) at 25°C despite having a molecular weight of only about 1000 Da. The viscosity may be compared to the very similar product of the preceding example which had a viscosity of only 0·134 Pas (134 cps), less than one-twentieth the viscosity of the comparative product. However, the material hardens in the collecting bottle and no further analysis is performed.

### Example 2

A one-liter stirred reactor is charged with 136.4 g product from Example 1, 0.02 g DMC catalyst, and 0.40 g benzoquinone. The mixture is heated to 100°C with stirring, and stripped under vacuum with nitrogen sparging. After stripping, propylene oxide (25 g) is fed to the reactor. The initial pressure of the reactor is 110·3 kPa (16 psig). After 22 minutes, the reactor pressure drops to 4·8 kPa (0.7 psig) and additional propylene oxide is fed to the reactor continuously at 6.5 g/min until a total of 131 g has been added. The reaction mixture is then cooked to constant pressure. To the reactor, 28 g acetonitrile is added and PO feeding to the reactor continued at a rate of 6.5 g/min to a total of 660 g. The reactor temperature is maintained at 100°C throughout this process. After propylene oxide addition is complete, the mixture is held at 100°C until a constant pressure is observed. Residual unreacted monomer and acetonitrile are then stripped under vacuum at 60°C from the product. The resulting product, in the amount of 7540 g, has a viscosity of 4.1 Pa.s (4,010 cps) (25°C), a hydroxyl number of 10.4 mg KOH/g, and an unsaturation of 0.0044 meq/g. GPC gives a number average molecular weight of 6933 and a polydispersity (Mw/Mn) of 1.26, despite the high molecular weight. NMR shows it contains substantially 92 PO units per methacrylate unit. The proposed structure is consistent with NMR and IR results.

### Example 3

A one-liter stirred reactor is charged with 100 g product from Example 1, 0.04 g DMC catalyst, 0.3 g benzoquinone and 200 g toluene. The mixture is heated to 100°C with stirring. Propylene oxide (39 g) is fed to the reactor. The initial pressure of the reactor is 103·4 kPa (15 psig). After 17 minutes, the reactor pressure drops to 9·7 kPa (1.4 psig) and additional propylene oxide is fed to the reactor continuously at 4 g/min to a total of 100 g. Then, the reaction temperature is increased to 130°C while PO feeding is maintained at 4 g/min throughout this temperature ramping. After a total of 500 g propylene oxide is added, the mixture is held at 130°C until a constant pressure is observed. Residual unreacted monomer and toluene are then stripped under vacuum at 60°C from the product. The resulting product, in the amount of 737 g, has a viscosity of 0·9 Pa.s (925 cps) (25°C), and contains 12% of toluene. It has a hydroxyl number of 8.4 mg KOH/g and an unsaturation of 0.0073 meq/g. GPC gives a number average weight of 4853 and a polydispersity (Mw/Mn) of 2.43. The proposed structure is consistent with NMR and IR results.

### Example 4

To a 12-oz reaction bottle, 100 g styrene, 100 g distilled water, 8 g product from Example 1, 1 g tricalcium phosphate, 0.8 benzoyl peroxide, 0.1 g-t-butyl perbenzoate, 0.6 ml sodium bisulfate (0.3% aq.) and 1 ml Nacconol (1%) are added. The bottle is capped and tumbled end-over-end in a bottle polymerizer at 90°C for 12 hours. The mixture in the bottle is acidified to pH 1.5 and washed with water. The polystyrene bead product is separated and air-dried. The beads are hot-molded and show a better impact strength than regular polystyrene.

### Example 5

This example demonstrates the preparation of an unsaturated macromonomer where hydroxypropylacrylate is used as the initiator molecule and a mixture of propylene oxide and ethylene oxide (50/50 molar ratio) is used during oxyalkylation. A) 7.6 litre (2 gallon) stirred reactor was charged with 100 g hydroxypropylacrylate, 0.57 g of DMC catalyst (prepared as described in U.S. Pat. No. 5,545,601), 700 g toluene and 0.50 g benzoquinone. The mixture was stripped under vacuum with nitrogen sparging at room temperature for 15 minutes. The mixture was then heated to 130°C while being stirred. Propylene oxide (containing 20.2% hydroxypropylacrylate) was then fed to the reactor at 14.3 g/min to a total of 2725 g while ethylene oxide was being fed to the reactor at 12 g/min to a total of 2175 g. The reactor temperature was maintained at 130°C during the addition of the alkylene oxides. Once alkylene oxide addition was completed, the mixture was held at 130°C until a constant pressure was observed. Residual unreacted alkylene oxide and toluene were then stripped under vacuum at 130°C from the reaction product. The unsaturated macromonomer thus obtained had a hydroxy number of 56.3 mg KOH/g. Gel permeation chromatography confirmed that the macromonomer had a number average molecular weight of 1073 and a polydispersity (Mw/Mn) of 1.38. NMR and IR analyses confirmed that the product had the desired well-defined structure.

### Example 6

This example demonstrates the preparation of an unsaturated macromonomer where hydroxypropylacrylate is used as the initiator molecule and a 70/30 molar ratio of ethylene oxide and propylene oxide is utilized during oxyalkylation.

A 7·6 litre (2 gallon) stirred reactor was charged with 130 g hydroxypropylacrylate, 0.8 g DMC catalyst (prepared as described in U.S. Pat. No. 5,545,601), 0.5 g benzoquinone, 4g BHT and 700 g toluene. The reaction mixture is stripped at room temperature for 15 minutes to remove oxygen and then heated with stirring to 130°C. Propylene oxide (120 g) was then fed to the reactor. The pressure within the reactor was initially 137·9 kPa (20 psig) but dropped to 88.3 kPa (12.8 psig) after 2 minutes. Additional propylene oxide was fed to the reactor continuously at 6.5 g/min to a total of 1161 g and at the same time ethylene oxide was fed to the reactor continuously at 15 g/min to a total of 2709 g. After addition was completed, the reaction mixture was held at 130°C until a constant pressure was observed. Residual unreacted alkylene oxide and toluene were then stripped under vacuum at 130°C from the product. The product (3990 g) had a viscosity of 2·7 Pa.s (2745 cps) and had a structure, according to NMR and IR analyses, consistent with that of the desired well defined unsaturated macromonomer.

### Example 7

This example demonstrates the synthesis of an unsaturated macromonomer prepared using hydroxypropylmethacrylate as the initiator molecule and a 50/50 molar ratio of ethylene oxide and propylene oxide.

A one liter stirred reactor was charged with 230.7 g hydroxypropylmethacrylate, 0.5 g DMC catalyst (prepared in accordance with U.S. Pat. No. 5,545,601), 0.6 g benzoquinone, and 0.4 g BHT. The mixture was vacuum stripped at 100°C for 5 minutes to remove oxygen before introducing 40g propylene oxide. The pressure within the reactor was initially 158 kPa (23 psia), but dropped to 8·96 kPa (1.3 psia) after 8 minutes. Additional propylene oxide was fed to the reactor continuously at 2.5g/min to a total of 285 g and at the same time ethylene oxide was fed to the reactor continuously at 2.5 g/min to a total of 252 g. After addition was completed, the reaction mixture was held at 100°C until a constant pressure was observed. Residual unreacted alkylene oxide and toluene were then stripped from the product under vacuum at 100°C. The resulting product (766g) had a viscosity of 0.05 Pa.s (46 cps), a number average molecular weight (by GPC) of 552, and a polydispersity of 1.13. NMR and IR analysis confirmed the product had the desired well-defined unsaturated macromonomer structure.

### Example 8

This example demonstrates the copolymerization of an unsaturated macromonomer prepared using the procedure described in Example 5 where hydroxypropylacrylate is the initiator molecule, the macromonomer number average molecular weight is about 2000, and a 50/50 wt/wt mixture of ethylene oxide and propylene oxide is employed to oxyalkylate the initiator molecule. A mixture consisting of 80 g (0.04 equiv.) unsaturated macromonomer, 16.7 g (0.23 mol) acrylic acid, 0.97 g azobis(isobutyronitrile) and 0.76 g mercaptoacetic acid was charged to a 250 mL round bottom flask equipped with a mechanical stirrer, condenser and thermocontroller. The mixture was heated for 60 min at 85°C. The resulting copolymer was a clear, viscous liquid having a number average molecular weight of 10,000 and a weight average molecular weight of 35,000. The copolymer is expected to have utility as a water reducer and/or superplasticizer in cement, concrete and mortar compositions.

### Example 9

Water (60 g) was charged to a 250 mL round bottom flask and heated to 70°C. A mixture containing 61.2 g (0.061 equiv.) unsaturated macromonomer, 21.8 g (0.30 mol) acrylic acid, 0.77 g azobis(isobutyronitrile), and 1.78 g mercaptoacetic acid was added dropwise to the flask over 140 minutes. The unsaturated macromonomer had been prepared in accordance with the procedures of Example 5 using a 50/50 wt/wt mixture of ethylene oxide and propylene oxide to oxyalkylate the initiator molecule to a number average molecular weight of about 1000. At the end of the addition, the mixture was heated to 85°C for 30 minutes. The resulting water-soluble copolymer had a number average molecular weight of 4700 and a weight average molecular weight of 14,600 and may be utilized to increase the fluidity of a freshly mixed cement or concrete composition.

### Example 10

An unsaturated macromonomer was prepared in accordance with the procedures of Example 7 using hydroxypropylmethacrylate as the initiator molecule and a 50/50 wt/wt mixture of ethylene oxide and propylene oxide to oxyalkylate the hydroxypropylmethacrylate to a number average molecular weight of about 500. The unsaturated macromonomer (40 g; 0.08 equiv.) was dissolved in 60 g water and mixed with 4.92 g (0.068 mol) acrylic acid, 0.59 g azobis(isobutyronitrile), and 1.11 g mercaptoacetic acid. The mixture was heated for 30 minutes at 70°C. The resulting copolymer had a number average molecular weight of 3300, a weight average molecular weight of 21,000, and may be used as a water reducer additive in cement, concrete or mortar compositions.

### Comparative Example C2

A commercial sample of a polyether acrylate made by esterification of acrylic acid with a 400 molecular weight poly(ethylene glycol) was obtained. The polyether acrylate was comprised of about 80% of the mono-acrylate ester and about 20% of the diacrylate ester of the poly(ethylene glycol). A solution of 70 g (0.15 equiv.) of the polyether acrylate, 25.0 g (0.35 mol) acrylic acid, 1.35 g azobis(isobutyronitrile), and 1.35 g mercaptoacetic acid were added dropwise to 40 g water at 85°C. After 10 minutes, the reaction mixture gelled. The copolymerization was repeated at 60°C with all the reaction components mixed initially in the reactor. This product also gelled and could not be further used.

## Claims

1. A hydroxyl-functional and unsaturation-functional polyoxyalkylene polyether having (a) not more than one initiator molecule per molecule of polyether and (b) not more than 0.020 meq/g unsaturation beyond that of the initiator-molecule derived unsaturation preparable by:
a) selecting an initiator molecule having a number average molecular weight below 500 Da, at least one site of carbon-carbon unsaturation, and at least one functional group which is oxyalkylatable by alkylene oxide in the presence of a double metal cyanide complex catalyst wherein said initiator molecule has not more than one free carboxylic acid group;
b) oxyalkylating said initiator molecule with one or more alkylene oxides in the presence of an effective amount of a double metal cyanide complex catalyst and under conditions effective to form such a polyoxyalkylene polyether; and
c) recovering a hydroxyl- and unsaturation-functional polyoxyalkylene polyether having (a) not more than one initiator molecule per molecule of polyether and (b) not more than 0.020 meq/g unsaturation beyond that of initiator-molecule derived unsaturation.

2. A polyoxyalkylene polyether according to Claim 1 wherein the initiator molecule has a molecular weight of less than 300 Da.

3. A polyoxyalkylene polyether according to Claim 1 or 2 wherein the initiator molecule comprises a monounsaturated monocarboxylic acid or a hydroxyester thereof or an anhydride thereof.

4. A polyoxyalkylene polyether according to Claim 3 wherein the hydroxyester comprises a hydroxyalkylacrylate or hydroxy alkyl methacrylate, preferably hydroxyethylmethacrylate, hydroxyethylacrylate, hydroxypropylmethacrylate, or hydroxypropylacrylate.

5. A polyoxyalkylene polyether according to Claim 3 wherein the acid comprises acrylic acid or methacrylic acid.

6. A polyoxyalkylene polyether according to any preceding Claim selected from the group consisting of ethylene oxide, propylene oxide, and mixtures thereof.

7. A polyoxyalkylene polyether according to any preceding Claim of the formula :
R(-X-{-(R²-0)ₙ -H}ₘ),
wherein o is 1, n is an integer whose average value is such that the product n x o is from 10 to about 500, R² is alkylene or substituted alkylene, X is 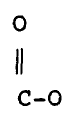 and R is a C₂ to C₃₀ hydrocarbon containing one site of ethylenic unsaturation.

8. A polyoxyalkylene polyether according to any preceding Claim which has a polydispersity from 1.0 to 1.5.

9. A polyoxyalkylene polyether according to any preceding Claim which contains less than 0.010 meq/g unsaturation other than said initiator molecule-derived unsaturation.

10. A polyoxyalkylene polyether according to any preceding Claim wherein the polyether has a molecular weight greater than 2000 Da, preferably greater than 4000 Da and most preferably greater than 8000 Da.

11. A process for the preparation of a polyoxyalkylene polyether according to any preceding Claim which process comprises:
a) selecting an initiator molecule having a number average molecular weight below 500 Da, at least one site of carbon-carbon unsaturation, and at least one functional group which is oxyalkylatable by alkylene oxide in the presence of a double metal cyanide complex catalyst wherein said initiator molecule has not more than one free carboxylic acid group;
b) oxyalkylating said initiator molecule with one or more alkylene oxides in the presence of an effective amount of a double metal cyanide complex catalyst and under conditions effective to form such a polyoxyalkylene polyether; and
c) recovering a hydroxyl- and unsaturation-functional polyoxyalkylene polyether having (a) not more than one initiator molecule per molecule of polyether and (b) not more than 0.020 meq/g unsaturation beyond that of initiator-molecule derived unsaturation.

12. A process according to Claim 11 wherein the oxyalkylation is effected in the presence of one or more vinyl polymerisation inhibitors.

13. A process according to Claim 12 wherein said inhibitor is one which functions in the absence of oxygen.

14. A process according to Claims 12 or 13 wherein said inhibitor is present in an amount from 0.01 to 5 weight percent, preferably from 0.05 to 1.0 weight percent, based on the weight of said initiator molecule.

15. A process according to any of Claims 12 to 14 wherein said inhibitor comprises 1, 4-benzoquinone.

16. A process according to any of Claims 11 to 15 wherein the oxyalkylation is effected at a temperature below 90°C, preferably below 80°C.

17. A process according to any of Claims 11 to 16 wherein at least a portion of said oxyalkylation takes place in an aprotic solvent.

18. A process according to any of Claims 11 to 17 wherein the polyether is as defined in any of Claims 1 to 10.

19. A copolymer obtainable by copolymerising a polyoxyalkylene polyether according to any of Claims 1 to 10 or prepared according to any of Claims 11 to 18 with an ethylenically unsaturated comonomer.

20. A copolymer according to Claim 19 wherein the comonomer comprises at least one carboxylic acid-based group selected from free carboxylic acids, carboxylic acid salts, hydroxyalkyl ester of carboxylic acids and carboxylic acid anhydrides.

21. A copolymer according to Claim 20 wherein the polyoxyalkylene polyether is represented by the following formula: 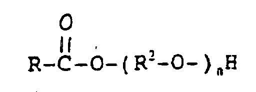 wherein n is an integer whose average value is from about 5 to 100, R² is alkylene or substituted alkylene, and R is a C₂-C₃₀ hydrocarbon containing one site of ethylenic unsaturation.

22. A copolymer according to Claim 20 or 21 wherein the comonomer is represented by the following formula: 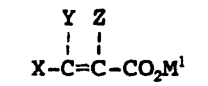 wherein X and Y are the same or different and are selected from hydrogen, methyl, or a moiety represented by the formula (-CH₂-)ₘCO₂M² where m is an integer of 0 to 2, or X together with -CO₂M¹ forms an anhydride ring, Z is selected from hydrogen or methyl and M¹ and M² are independently selected from hydrogen, alkali metal, alkaline earth metal, ammonium, alkyl ammonium or hydroxyalkyl.

23. A copolymer according to any of Claims 20, 21 or 22 wherein the comonomer is selected from the group consisting of acrylic acid, methacrylic acid, maleic acid, fumaric acid, and salts and mixtures thereof.

24. A copolymer according to any of Claims 20 to 23 which has a number average molecular weight from 5000 to 100 000.

25. A process for preparing a copolymer according to any of Claims 20 to 24, which process comprises copolymerising a polyoxyalkylene polyether according to any of Claims 1 to 10 with an ethylenically unsaturated comonomer.

26. A process according to Claim 25 wherein the polyether and/or the comonomer are as defined in any of Claims 20 to 24.

27. A cement composition comprised of cement and from 0.001 to 10% by weight based on the weight of cement of a copolymer according to any of Claims 20 to 24 or prepared in accordance with Claims 25 or 26.

28. A concrete composition comprised of cement, aggregate and from 0.001% to 10% by weight, based on the weight of cement, of a copolymer according to any of Claims 20 to 24 or prepared in accordance with Claims 25 to 26.

29. A method of increasing the fluidity of a hydraulic cement composition comprising adding from 0.001 to 10 percent by weight, based on the weight of dry cement, of a copolymer according to any of Claims 20 to 24 or prepared in accordance with Claims 25 to 26.

30. A polymer polyol preparable by:
a) selecting one or more hydroxyl-functional base polyol(s) having a nominal functionality of 2 or more in the aggregate;
b) adding to said hydroxyl-functional base polyol(s) an effective stabilizing amount of one or more polyethers selected from:
b)i) a polyether according to any of Claims 1 to 10 or prepared according to any of Claims 11 to 18;
b)ii) a preformed stabilizer prepared by the polymerization of one or more vinyl monomers in the presence of a polyether according to any of Claims 1 to 10 or prepared according to any of Claims 11 to 18; or
b)iii) mixtures thereof and
c) polymerizing one or more vinyl monomers *in situ* in said base polyol(s) in the presence of said polyether to prepare a stable, low viscosity vinyl polymer dispersion containing from 10 weight percent to 70 weight percent vinyl polymer solids.

31. A process for preparing a polymer polyol, which process comprises:
a) selecting one or more hydroxyl-functional base polyol(s) having a nominal functionality of 2 or more in the aggregate;
b) adding to said hydroxyl-functional base polyol(s) an effective stabilizing amount of one or more polyethers selected from:
b)i) a polyether according to any of Claims 1 to 10 or prepared according to any of Claims 11 to 18;
b)ii) a preformed stabilizer prepared by the polymerization of one or more vinyl monomers in the presence of a polyether according to any of Claims 1 to 10 or prepared according to any of Claims 11 to 18; or
b)iii) mixtures thereof; and
c) polymerizing one or more vinyl monomers in situ in said base polyol(s) in the presence of said polyether to prepare a stable, low viscosity vinyl polymer dispersion containing from 10 weight percent to 70 weight percent vinyl polymer solids.

32. The use of a polyoxyalkylene polyether according to any of Claims 1 to 10 or prepared according to any of Claims 11 to 18 as a polymer polyol stabiliser or preformed precursor.

33. The use of a copolymer according to any of Claims 19 to 24 or prepared according to any of Claims 25 to 27 as a cement or concrete additive.

## Patentansprüche

1. Hydroxyfunktionaler und Unsättigungen aufweisender Polyoxyalkylenpolyether mit (a) nicht mehr als einem Initiatormolekül pro Molekül an Polyether und (b) nicht mehr als 0,020 meq/g an Unsättigungen über die von dem Initiatormolekül abgeleitete Unsättigung hinaus, herstellbar durch:
a) Auswählen eines Initiatormoleküls mit einem zahlenmittleren Molekulargewicht unterhalb von 500 Da, mindestens einer Stelle einer Kohlenstoff-Kohlenstoff-Unsättigung und mindestens einer funktionalen Gruppe, die durch ein Alkylenoxid in Anwesenheit eines Doppelmetallcyanidkomplexes als Katalysator oxyalkylierbar ist, worin das Initiatormolekül nicht mehr als eine freie Carbonsäuregruppe aufweist;
b) Oxyalkylieren des Initiatormoleküls mit einem oder mehreren Alkylenoxiden in Anwesenheit einer wirksamen Menge eines Doppelmetallcyanidkomplexes als Katalysator und unter Bedingungen, die zur Bildung eines solchen Polyoxyalkylenpolyethers wirksam sind; und
c) Gewinnen eines hydroxyfunktionalen und Unsättigungen aufweisenden Polyoxyalkylenpolyethers mit (a) nicht mehr als einem Initiatormolekül pro Molekül an Polyether und (b) nicht mehr als 0,020 meq/g an Unsättigungen über die vom Initiatormolekül abgeleitete Unsättigung hinaus.

2. Polyoxyalkylenpolyether gemäß Anspruch 1, worin das Initiatormolekül ein Molekulargewicht von weniger als 300 Da aufweist.

3. Polyoxyalkylenpolyether gemäß Anspruch 1 oder 2, worin das Initiatormolekül eine monoungesättigte Monocarbonsäure oder einen Hydroxyester oder ein Anhydrid derselben umfasst.

4. Polyoxyalkylenpolyether gemäß Anspruch 3, worin der Hydroxyester ein Hydroxyalkylacrylat oder Hydroxyalkylmethacrylat, vorzugsweise Hydroxyethylmethacrylat, Hydroxyethylacrylat, Hydroxypropylmethacrylat oder Hydroxypropylacrylat umfasst.

5. Polyoxyalkylenpolyether gemäß Anspruch 3, worin die Säure Acrylsäure oder Methacrylsäure umfasst.

6. Polyoxyalkylenpolyether gemäß einem der vorstehenden Ansprüche, ausgewählt aus der Gruppe, bestehend aus Ethylenoxid, Propylenoxid und Mischungen derselben.

7. Poyloxyalkylenpolyether gemäß einem der vorstehenden Ansprüche der Formel:
R(-X- {-(R²-O)ₙ -H}ₘ)
worin o 1 ist, n eine ganze Zahl ist, deren Mittelwert so bemessen ist, dass das Produkt von n x o von 10 bis etwa 500 beträgt, R² Alkylen oder substituiertes Alkylen ist, X bedeutet (C=O)-O und R ein C₂- bis C₃₀- Kohlenwasserstoff ist, enthaltend eine Stelle einer ethylenischen Unsättigung.

8. Polyoxyalkylenpolyether gemäß einem der vorstehenden Ansprüche, der eine Polydispersität von 1,0 bis 1,5 aufweist.

9. Polyoxyalkylenpolyether gemäß einem der vorstehenden Ansprüche, der weniger als 0,010 meq/g andere Unsättigung als die vom Initiatormolekül abgeleitete Unsättigung enthält.

10. Polyoxyalkylenpolyether gemäß einem der vorstehenden Ansprüche, worin der Polyether ein Molekulargewicht größer als 2000 Da, vorzugsweise größer als 4000 Da und am meisten bevorzugt größer als 8000 Da aufweist.

11. Verfahren zur Herstellung eines Polyoxyalkylenpolyethers gemäß einem der vorstehenden Ansprüche, welches Verfahren umfasst:
a) Auswählen eines Initiatormolekülsmit einem zahlenmittleren Molekulargewicht unterhalb von 500 Da, mindestens einer Stelle einer Kohlenstoff-Kohlenstoff-Unsättigung und mindestens einer funktionalen Gruppe, die durch ein Alkylenoxid in Anwesenheit eines Doppelmetallcyanidkomplexes als Katalysator oxyalkylierbar ist, worin das Initiatormolekül nicht mehr als eine freie Carbonsäuregruppe aufweist;
b) Oxyalkylieren des Initiatormoleküls mit einem oder mehreren Alkylenoxiden in Anwesenheit einer wirksamen Menge eines Doppelmetallcyanidkomplexes als Katalysator und unter Bedingungen, die zur Bildung eines solchen Polyoxyalkylenpolyethers wirksam sind; und
c) Rückgewinnen eines hydroxyfunktionalen und Unsättigungen aufweisenden Polyoxyalkylenpolyethers mit (a) nicht mehr als einem Initiatormolekül pro Molekül an Polyether und (b) nicht mehr als 0,020 meq/g Unsättigung über die vom Initiatormolekül abgeleitete Unsättigung hinaus.

12. Verfahren gemäß Anspruch 11, worin die Oxyalkylierung in Anwesenheit von einem oder mehreren Vinyl-Polymerisationsinhibitoren bewirkt wird.

13. Verfahren gemäß Anspruch 12, worin der Inhibitor einer ist, der in Abwesenheit von Sauerstoff funktioniert.

14. Verfahren gemäß Anspruch 12 oder 13, worin der Inhibitor in einer Menge von 0,01 bis 5 Gew.-%, vorzugsweise von 0,05 bis 1,0 Gew.-% vorliegt, basierend auf dem Gewicht des Initiatormoleküls.

15. Verfahren gemäß einem der Ansprüche 12 bis 14, worin der Inhibitor 1,4-Benzochinon umfasst.

16. Verfahren gemäß einem der Ansprüche 11 bis 15, worin die Oxyalkylierung bei einer Temperatur unterhalb von 90°C, vorzugsweise unterhalb von 80°C bewirkt wird.

17. Verfahren gemäß einem der Ansprüche 11 bis 16, worin mindestens ein Teil der Oxyalkylierung in einem aprotischen Lösungsmittel abläuft.

18. Verfahren gemäß einem der Ansprüche 11 bis 17, worin der Polyether wie in einem der Ansprüche 1 bis 10 definiert ist.

19. Copolymer, erhältlich durch Copolymerisieren eines Polyoxyalkylenpolyethers gemäß einem der Ansprüche 1 bis 10 oder hergestellt nach einem der Ansprüche 11 bis 18 mit einem ethylenisch ungesättigten Comonomer.

20. Copolymer gemäß Anspruch 19, worin das Comonomer mindestens eine auf einer Carbonsäure basierende Gruppe umfasst, ausgewählt unter freien Carbonsäuren, Carbonsäuresalzen, Hydroxyalkylestern von Carbonsäuren und Carbonsäureanhydriden.

21. Copolymer gemäß Anspruch 20, worin der Polyoxyalkylenpolyether durch die folgende Formel dargestellt wird: 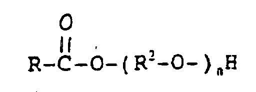 worin n eine ganze Zahl bedeutet, deren Mittelwert von etwa 5 bis 100 beträgt, R² Alkylen oder substituiertes Alkylen ist und R ein C₂-C₃₀-Kohlenwasserstoff ist, enthaltend eine Stelle einer ethylenischen Unsättigung.

22. Copolymer gemäß Anspruch 20 oder 21, worin das Comonomer dargestellt wird durch die folgende Formel: 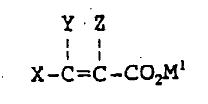 worin X und Y gleich oder verschieden sind und ausgewählt sind unter Wasserstoff, Methyl oder einer Einheit, dargestellt durch die Formel (-CH₂-)ₘCO₂M²,
worin m eine ganze Zahl von 0 bis 2 ist, oder X zusammen mit -CO₂M¹ einen Anhydridring bildet, Z ausgewählt ist unter Wasserstoff und Methyl und M¹ und M² unabhängig ausgewählt sind unter Wasserstoff, Alkalimetall, Erdalkalimetall, Ammonium, Alkylammonium oder Hydroxyalkyl.

23. Copolymer gemäß einem der Ansprüche 20, 21 oder 22, worin das Comonomer ausgewählt ist aus der Gruppe, bestehend aus Acrylsäure, Methacrylsäure, Maleinsäure, Fumarsäure und Salzen und Mischungen derselben.

24. Copolymer gemäß einem der Ansprüche 20 bis 23, das ein zahlenmittleres Molekulargewicht von 5.000 bis 100.000 aufweist.

25. Verfahren zur Herstellung eines Copolymeren gemäß einem der Ansprüche 20 bis 24, welches Verfahren das Copolymerisieren eines Polyoxyalkylenpolyethers gemäß einem der Ansprüche 1 bis 10 mit einem ethylenisch ungesättigten Comonomeren umfasst.

26. Verfahren gemäß Anspruch 25, worin der Polyether und/oder das Comonomer wie in einem der Ansprüche 20 bis 24 definiert sind.

27. Zementzusammensetzung, bestehend aus Zement und von 0,001 bis 10 Gew.-%, basierend auf dem Gewicht des Zements, eines Copolymeren gemäß einem der Ansprüche 20 bis 24 oder hergestellt in Übereinstimmung mit den Ansprüche 25 oder 26.

28. Betonzusammensetzung, bestehend aus Zement, Zuschlag und von 0,001 bis 10 Gew.-%, basierend auf dem Gewicht des Zements, eines Copolymeren gemäß einem der Ansprüche 20 bis 24 oder hergestellt in Übereinstimmung mit den Ansprüchen 25 bis 26.

29. Verfahren zur Steigerung der Fluidität einer hydraulischen Zementzusammensetzung, bestehend aus dem Zusetzen von 0,001 bis 10 Gew.-%, basierend auf dem Gewicht des trockenen Zements, eines Copolymeren gemäß einem der Ansprüche 20 bis 24 oder hergestellt in Übereinstimmung mit den Ansprüche 25 bis 26.

30. Polymerpolyol, herstellbar durch:
a) Wahl eines oder mehrerer hydroxyfunktioneller Grundpolyol(e) mit einer nominalen Funktionalität von 2 oder darüber in dem Zuschlag;
b) Zusetzen zu dem oder den hydroxyfunktionalen Grundpolyol(en) einer wirksam stabilisierenden Menge von einem oder mehreren Polyethern, ausgewählt unter:
b)i) einem Polyether gemäß einem der Ansprüche 1 bis 10 oder hergestellt gemäß einem der Ansprüche 11 bis 18;
b)ii) einem vorgeformten Stabilisator, hergestellt durch Polymerisation von einem oder mehreren Vinylmonomeren in Anwesenheit eines Polyethers gemäß einem der Ansprüche 1 bis 10 oder hergestellt gemäß einem der Ansprüche 11 bis 18; oder
b)iii) Mischungen davon, und
c) Polymerisieren von einem oder mehreren Vinylmonomeren *in situ* in dem oder den Grundpolyol(en) in Anwesenheit des Polyethers zur Herstellung einer stabilen Vinylpolymerdispersion mit niedriger Viskosität, enthaltend von 10 Gew.-% bis 70 Gew.-% Vinylpolymer-Feststoff.

31. Verfahren zur Herstellung eines Polymerpolyols, das Verfahren umfassend:
a) Wahl eines oder mehrerer hydroxyfunktionaler Grundpolyol(e) mit einer nominalen Funktionalität von 2 oder darüber in dem Zuschlag;
b) Zusetzen zu dem oder den hydroxyfunktionalen Grundpolyol(en) einer effektiv stabilisierenden Menge von einem oder mehreren Polyethern, ausgewählt unter:
b)i) einem Polyether gemäß einem der Ansprüche 1 bis 10 oder hergestellt gemäß einem der Ansprüche 11 bis 18;
b)ii) einem vorgeformten Stabilisator, hergestellt durch Polymerisation von einem oder mehreren Vinylmonomeren in Anwesenheit eines Polyethers gemäß einem der Ansprüche 1 bis 10 oder hergestellt gemäß einem der Ansprüche 11 bis 18; oder
b)iii) Mischungen derselben, und
c) Polymerisieren von einem oder mehreren Vinylmonomer(en) *in situ* in dem oder den Grundpolyol(en) in Anwesenheit des Polyethers zur Herstellung einer stabilen Vinylpolymerdispersion mit niedriger Viskosität, enthaltend von 10 Gew.-% bis 70 Gew.-% Vinylpolymer-Feststoff.

32. Verwendung eines Polyoxyalkylenpolyethers gemäß einem der Ansprüche 1 bis 10 oder hergestellt nach einem der Ansprüche 11 bis 18 als Polymerpolyol-Stabilisator oder vorgeformter Vorläufer.

33. Verwendung eines Copolymeren gemäß einem der Ansprüche 19 bis 24 oder hergestellt nach einem der Ansprüche 25 bis 27 als Zement- oder Betonadditiv.

## Revendications

1. Polyéther polyoxyalkylène à fonction hydroxyle et à fonction insaturation n'ayant (a) pas plus d'une molécule initiatrice par molécule de polyéther et (b) pas plus de 0,020 meq/g d'insaturation au-delà de celle de l'insaturation dérivée de la molécule initiatrice pouvant être préparé :
a) en choisissant une molécule initiatrice ayant une masse moléculaire moyenne en nombre inférieure à 500 Da, au moins un site d'insaturation carbone-carbone, et au moins un groupe fonctionnel pouvant être oxyalkylé avec de l'oxyde d'alkylène en présence d'un catalyseur complexe de cyanure de métal double dans laquelle ladite molécule initiatrice n'a pas plus d'un groupe acide carboxylique libre ;
b) en oxyalkylant ladite molécule initiatrice avec un ou plusieurs oxydes d'alkylène en présence d'une quantité efficace d'un catalyseur complexe de cyanure de métal double et dans des conditions efficaces pour former un tel polyéther polyoxyalkylène ; et
c) en récupérant un polyéther polyoxyalkylène à fonction hydroxyle et à fonction insaturation n'ayant (a) pas plus d'une molécule initiatrice par molécule de polyéther et (b) pas plus de 0,020 meq/g d'insaturation au-delà de celle de l'insaturation dérivée de la molécule initiatrice.

2. Polyéther polyoxyalkylène selon la revendication 1 dans lequel la molécule initiatrice a une masse moléculaire inférieure à 300 Da.

3. Polyéther polyoxyalkylène selon la revendication 1 ou 2 dans lequel la molécule initiatrice comprend un acide monocarboxylique mono-insaturé ou un hydroxyester de celui-ci ou un anhydride de celui-ci.

4. Polyéther polyoxyalkylène selon la revendication 3 dans lequel l'hydroxyester comprend un hydroxyalkylacrylate ou un hydroxyalkylméthacrylate, de préférence un hydroxyéthylméthacrylate, un hydroxyéthylacrylate, un hydroxypropylméthacrylate, ou un hydroxypropylacrylate.

5. Polyéther polyoxyalkylène selon la revendication 3 dans lequel l'acide comprend de l'acide acrylique ou de l'acide méthacrylique.

6. Polyéther polyoxyalkylène selon l'une quelconque des revendications précédentes choisi dans le groupe composé d'oxyde d'éthylène, d'oxyde de propylène, et de mélanges de ceux-ci.

7. Polyéther polyoxyalkylène selon l'une quelconque des revendications précédentes de formule :
R(-X-{R²-0)ₙ- H}ₘ)ₒ
dans laquelle o est 1, n est un nombre entier dont la valeur moyenne est telle que le produit n x o est de 10 à environ 500, R² est un alkylène ou alkylène substitué, X est 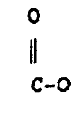 et R est un hydrocarbure en C₂-C₃₀ contenant un site d'insaturation éthylénique.

8. Polyéther polyoxyalkylène selon l'une quelconque des revendications précédentes qui a une polydispersité de 1,0 à 1,5.

9. Polyéther polyoxyalkylène selon l'une quelconque des revendications précédentes qui contient moins de 0,010 meq/g d'insaturation autre que l'insaturation dérivée de ladite molécule initiatrice.

10. Polyéther polyoxyalkylène selon l'une quelconque des revendications précédentes dans lequel le polyéther a une masse moléculaire supérieure à 2000 Da, de préférence supérieure à 4000 Da, et de manière préférée entre toutes supérieure à 8000 Da.

11. Procédé de préparation d'un polyéther polyoxyalkylène selon l'une quelconque des revendications précédentes, lequel procédé comprend de :
a) choisir une molécule initiatrice ayant une masse moléculaire moyenne en nombre inférieure à 500 Da, au moins un site d'insaturation carbone-carbone, et au moins un groupe fonctionnel pouvant être oxyalkylé avec de l'oxyde d'alkylène en présence d'un catalyseur complexe de cyanure de métal double dans laquelle ladite molécule initiatrice n'a pas plus d'un groupe acide carboxylique libre ;
b) oxyalkyler ladite molécule initiatrice avec un ou plusieurs oxydes d'alkylène en présence d'une quantité efficace d'un catalyseur complexe de cyanure de métal double et dans des conditions efficaces pour former un tel polyéther polyoxyalkylène ; et
c) récupérer un polyéther polyoxyalkylène à fonction hydroxyle et à fonction insaturation n'ayant (a) pas plus d'une molécule initiatrice par molécule de polyéther et (b) pas plus de 0,020 meq/g d'insaturation au-delà de celle de l'insaturation dérivée de la molécule initiatrice.

12. Procédé selon la revendication 11 dans lequel l'oxyalkylation est effectuée en présence d'un ou plusieurs inhibiteurs de polymérisation vinylique.

13. Procédé selon la revendication 12 dans lequel ledit inhibiteur est un inhibiteur qui fonctionne en l'absence d'oxygène.

14. Procédé selon la revendication 12 ou 13 dans lequel ledit inhibiteur est présent en une quantité de 0,01 à 5 pour cent en poids, de préférence de 0,05 à 1,0 pour cent en poids, sur la base du poids de ladite molécule initiatrice.

15. Procédé selon l'une quelconque des revendications 12 à 14 dans lequel ledit inhibiteur comprend de la 1,4-benzoquinone.

16. Procédé selon l'une quelconque des revendications 11 à 15 dans lequel l'oxyalkylation est effectuée à une température inférieure à 90°C, de préférence inférieure à 80°C.

17. Procédé selon l'une quelconque des revendications 11 à 16 dans lequel au moins une partie de ladite oxyalkylation se produit dans un solvant aprotique.

18. Procédé selon l'une quelconque des revendications 11 à 17 dans lequel le polyéther est tel que défini dans l'une quelconque des revendications 1 à 10.

19. Copolymère pouvant être obtenu par copolymérisation d'un polyéther polyoxyalkylène selon l'une quelconque des revendications 1 à 10 ou préparé selon l'une quelconque des revendications 11 à 18 avec un comonomère présentant une insaturation éthylénique.

20. Copolymère selon la revendication 19 dans lequel le comonomère comprend au moins un groupe à base d'acide carboxylique choisi parmi les acides carboxyliques libres, les sels d'acide carboxylique, l'ester hydroxyalkyle des acides carboxyliques et les anhydrides d'acide carboxylique.

21. Copolymère selon la revendication 20 dans lequel le polyéther polyoxyalkylène est représenté par la formule suivante : 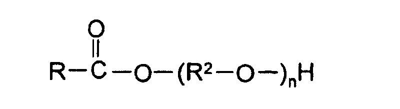 dans laquelle n est un nombre entier dont la valeur moyenne est d'environ 5 et 100, R² est un alkylène ou alkylène substitué, et R est un hydrocarbure en C₂-C₃₀ contenant un site d'insaturation éthylénique.

22. Copolymère selon la revendication 20 ou 21 dans lequel le comonomère est représenté par la formule suivante : 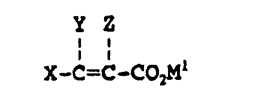 dans laquelle X et Y sont identiques ou différents et sont choisis parmi l'hydrogène, le méthyle, ou un fragment représenté par la formule (-CH₂-)ₘCO₂M² où m est un nombre entier de 0 à 2, ou X avec -CO₂M¹ forme un cycle anhydride, Z est choisi parmi l'hydrogène ou le méthyle et M¹ et M² sont indépendamment choisis parmi l'hydrogène, un métal alcalin, un métal alcalino-terreux, l'ammonium, un ammonium d'alkyle ou un hydroxyalkyle.

23. Copolymère selon l'une quelconque des revendications 20, 21 ou 22 dans lequel le comonomère est choisi dans le groupe composé de l'acide acrylique, l'acide méthacrylique, l'acide maléique, l'acide fumarique, et des sels et des mélanges de ceux-ci.

24. Copolymère selon l'une quelconque des revendications 20 à 23 qui a une masse moléculaire moyenne en nombre de 5000 et 100000.

25. Procédé de préparation d'un copolymère selon l'une quelconque des revendications 20 à 24, lequel procédé comprend la copolymérisation d'un polyéther polyoxyalkylène selon l'une quelconque des revendications 1 à 10 avec un comonomère présentant une insaturation éthylénique.

26. Procédé selon la revendication 25 dans lequel le polyéther et/ou le comonomère sont tels que définis dans l'une quelconque des revendications 20 à 24.

27. Composition de ciment composée de ciment et de 0,001 à 10 % en poids sur la base du poids du ciment d'un copolymère selon l'une quelconque des revendications 20 à 24 ou préparé conformément aux revendications 25 ou 26.

28. Composition de béton composée de ciment, d'agrégat et de 0,001 % à 10 % en poids, sur la base du poids du ciment, d'un copolymère selon l'une quelconque des revendications 20 à 24 ou préparé conformément aux revendications 25 à 26.

29. Procédé pour augmenter la fluidité d'une composition de ciment hydraulique comprenant l'ajout de 0,001 à 10 pour cent en poids, sur la base du poids du ciment sec, d'un copolymère selon l'une quelconque des revendications 20 à 24 ou préparé conformément aux revendications 25 à 26.

30. Polyol polymère pouvant être préparé :
a) en choisissant un ou plusieurs polyol(s) de base à fonction hydroxyle ayant une fonctionnalité nominale de 2 ou plus dans l'agrégat ;
b) en ajoutant au(x) dit(s) polyol(s) de base à fonction hydroxyle une quantité stabilisante efficace d'un ou plusieurs polyéthers choisis parmi :
b)i) un polyéther selon l'une quelconque des revendications 1 à 10 ou préparé selon l'une quelconque des revendications 11 à 18 ;
b)ii) un stabilisant préformé préparé par polymérisation d'un ou plusieurs monomères vinyliques en présence d'un polyéther selon l'une quelconque des revendications 1 à 10 ou préparé selon l'une quelconque des revendications 11 à 18 ; ou
b)iii) des mélanges de ceux-ci ; et
c) en polymérisant un ou plusieurs monomères vinyliques *in situ* dans ledit (lesdits) polyol(s) de base en présence dudit polyéther pour préparer une dispersion de polymère vinylique stable basse viscosité contenant de 10 pour cent en poids à 70 pour cent en poids de matières solides de polymères vinyliques.

31. Procédé de préparation d'un polyol polymère, lequel procédé comprend :
a) de choisir un ou plusieurs polyol(s) de base à fonction hydroxyle ayant une fonctionnalité nominale de 2 ou plus dans l'agrégat ;
b) d'ajouter au(x) dit(s) polyol(s) de base à fonction hydroxyle une quantité stabilisante efficace d'un ou plusieurs polyéthers choisis parmi :
b)i) un polyéther selon l'une quelconque des revendications 1 à 10 ou préparé selon l'une quelconque des revendications 11 à 18 ;
b)ii) un stabilisant préformé préparé par polymérisation d'un ou plusieurs monomères vinyliques en présence d'un polyéther selon l'une quelconque des revendications 1 à 10 ou préparé selon l'une quelconque des revendications 11 à 18 ; ou
b)iii) des mélanges de ceux-ci ; et
c) de polymériser un ou plusieurs monomères vinyliques *in situ* dans ledit (lesdits) polyol(s) de base en présence dudit polyéther pour préparer une dispersion de polymère vinylique stable basse viscosité contenant de 10 pour cent en poids à 70 pour cent en poids de matières solides de polymère vinylique.

32. Utilisation d'un polyéther polyoxyalkylène selon l'une quelconque des revendications 1 à 10 ou préparé selon l'une quelconque des revendications 11 à 18 comme stabilisant ou précurseur préformé de polyol polymère.

33. Utilisation d'un copolymère selon l'une quelconque des revendications 19 à 24 ou préparé selon l'une quelconque des revendications 25 à 27 comme adjuvant de ciment ou de béton.
